# EUROPÄISCHE PATENTSCHRIFT

(11) **EP 3 999 772 B1**
(45) Veröffentlichungstag und Bekanntmachung des Hinweises auf die Patenterteilung: **18.12.2024**
(21) Anmeldenummer: 20736941.4
(22) Anmeldetag: 25.06.2020
(51) Int. Cl.: F17C 13/04

(54) **TANKVORRICHTUNG ZUR SPEICHERUNG EINES GASFÖRMIGEN MEDIUMS**
TANK DEVICE FOR STORING A GASEOUS MEDIUM
ENSEMBLE RÉSERVOIR POUR STOCKER UN MILIEU GAZEUX

(30) Priorität: 17.07.2019 DE 102019210515
(43) Veröffentlichungstag der Anmeldung: 25.05.2022
(73) Patentinhaber: Robert Bosch GmbH, 70442 Stuttgart (DE)
(72) Erfinder: SCHUELKE, Armin, 71134 Aidlingen (DE); KNEULE, Friedrich, 71277 Rutesheim (DE)
(86) Internationale Anmeldenummer: PCT/EP2020/067798
(87) Internationale Veröffentlichungsnummer: WO 2021/008841

(56) Entgegenhaltungen:
- DE-A1- 102009 014 057

## Beschreibung

Die Erfindung betrifft eine Tankvorrichtung für einen Brennstoffzellentank, insbesondere zur Speicherung von Wasserstoff, beispielsweise zur Anwendung in Fahrzeugen mit Brennstoffzellenantrieb.

### Stand der Technik

Die DE 10 2017 212 485 A1 beschreibt eine Einrichtung zur Speicherung von verdichteten Fluiden für ein Fahrzeug mit einem Antrieb mit gasförmigen Kraftstoffen, wobei die Einrichtung mindestens zwei rohrförmige Tankmodule und mindestens einen Hochdruckkraftstoffzuteiler mit mindestens einer integrierten Regel- und Sicherheitstechnik umfasst. Die mindestens zwei rohrförmigen Tankmodule werden mit dem mindestens einen Hochdruckkraftstoffzuteiler mit der mindestens einen integrierten Regel- und Sicherheitstechnik modular zu einem Modul in flexibler Geometrie verbunden. Die DE102009014057A1 beschreibt einen Druckbehälter und ein Verfahren gemäß dem Oberbegriff von Anspruch 1.

Die Sicherheitsvorrichtungen für solch eine Tankvorrichtung sind normiert. Dabei muss jede Tankvorrichtung beispielsweise ein Absperrventil aufweisen. So kann das Absperrventil bei einer Beschädigung der Tankvorrichtung hervorgerufen durch einen Unfall des Fahrzeugs mit Brennstoffzellenantrieb oder bei einem Bruch einer Leitung der Tankvorrichtung sicherstellen, dass die Tankbehälter geschlossen sind, da die Absperrventile im stromlosen Zustand geschlossen sind. So kann bei Unfällen und Defekten jederzeit ein Gasaustritt aus den Tankbehältern vermieden werden.

Gesetzliche Anforderungen sehen vor, dass je nach Behälter diese Sicherheitsventile direkt an oder sogar im Tankbehälter angebracht werden müssen. Somit sind die Sicherheitsventile dem gasförmigen Medium und dem Systemdruck direkt ausgesetzt, beispielsweise Systemdrücken bis zu 1000 bar. Diese hohen einwirkenden Kräfte auf die Sicherheitsventile erfordern aufwändige konstruktive Maßnahmen, um Beschädigungen und somit den Ausfall der Sicherheitsventile zu verhindern. Weiterhin müssen die Sicherheitsventile gegen ein mögliches "Abreißen" während eines Unfalls geschützt werden.

### Vorteile der Erfindung

Das erfindungsgemäße Verfahren mit den kennzeichnenden Merkmalen des Anspruchs 1 weist demgegenüber den Vorteil auf, dass durch Montage einer zusätzlichen Baukomponenten von der Innenseite der Tankvorrichtung die Abdichtung der Tankvorrichtung deutlich verbessert wird und eine in der Tankvorrichtung integriertes Sicherheitsventilvorrichtung vor Beschädigungen geschützt ist.

Dazu weist die Tankvorrichtung zur Speicherung eines gasförmigen Mediums, insbesondere Wasserstoff, mindestens einen Tankbehälter auf, welcher ein Tankgehäuse mit einem Tankhals aufweist. Darüber hinaus ist in dem Tankhals ein Anschlussverschraubungselement angeordnet, welches Anschlussverschraubungselement an einem an einer Innenseite des Tankgehäuses ausgebildeten konusförmigen Dichtsitz anliegt und so einen Tankhalsinnenraum des Tankhalses abdichtet. Das Anschlussverschraubungselement ist mittels eines an einer Außenseite des Tankgehäuses angebrachten Überwurfmutterelements vorspannbar.

Weiterhin beschreibt das erfindungsgemäße Verfahren ein Einführen des Anschlussverschraubungselements in den Tankhals des Tankbehälters der Tankvorrichtung. Das Einführen des Anschlussverschraubungselements erfolgt in den Tankhals bei bereits rückseitig verschlossenem Tankbehälter mittels Bördelung und es wird eine Vorrichtung bereitgestellt, mit welcher Vorrichtung das Anschlussverschraubungselement von außen aus dem Inneren des Tankbehälters durch den Tankhals an den Dichtsitz angelegt wird. Durch das Anschlussverschraubungselement im Tankhals des Tankbehälters wird eine verbesserte Abdichtung erzielt, indem der Druck im Inneren des Tankbehälters die Dichtwirkung verstärkt. Weiterhin kann beispielsweise ein "Abreißen" der Ventilvorrichtung verhindert werden, da diese im Tankbehälter angeordnet ist und dieser den Druckverhältnissen im Falle eines Unfalls standhält. Darüber hinaus kann so das typischerweise im Inneren des Tankhalses eingesetzte Anschlussgewinde, ausgebildet in dem Tankgehäuse, entfallen, so dass keine festigkeitsmindernden Kerben in dem Tankgehäuse vorhanden sind.

In erster vorteilhafter Weiterbildung ist es vorgesehen, dass das Anschlussverschraubungselement eine mittige Öffnung aufweist, welche Öffnung als Durchgangsbohrung ausgebildet wird. Vorteilhafterweise wird in der Öffnung des Anschlussverschraubungselements koaxial zu einer Längsachse des Tankbehälters eine Ventilvorrichtung aufgenommen und mittels Verschraubung fest mit dem Anschlussverschraubungselement verbunden. So kann in konstruktiv einfacher Weise die Ventilvorrichtung als Sicherheitsventil in den Tankbehälter integriert werden, wobei die Ventilvorrichtung vor Beschädigungen, hervorgerufen durch äußere Einflüsse wie beispielsweise Stöße während des Betriebs, geschützt ist. Außerdem kann so in einfacher Weise die Strömung des gasförmigen Mediums aus dem Tankbehälter gesteuert werden.

In vorteilhafter Weiterbildung ist es vorgesehen, dass der mindestens eine Tankbehälter für einen Differenzdruck von 1 bar bis 1000 bar gegenüber Atmosphärendruck ausgelegt wird. So kann die Verwendung der gasförmigen Medien in dem Tankbehälter optimiert werden.

In weiterer Ausgestaltung der Erfindung ist es vorteilhaft vorgesehen, dass der Tankhals zylinderförmig ausgebildet wird und als eine konische Erweiterung in einen zylinderförmigen Tankkörper übergeht, wobei ein Durchmesser d des Tankhalses kleiner ist als ein Durchmesser D des Tankkörpers. Durch diese Form ist eine gleichmäßige Druckverteilung innerhalb des Tankbehälters möglich.

In vorteilhafter Weiterbildung wird der mindestens eine Tankbehälter aus einem Kunststoffwerkstoff, Kohlefaserwerkstoff, Aluminium, Titan, Magnesium, Faserwerkstoff, insbesondere einem Glasfaserwerkstoff, oder Stahl hergestellt. So wird eine kostensparende Konstruktion des Tankbehälters erzielt.

Die beschriebene Tankvorrichtung eignet sich vorzugsweise in einer Brennstoffzellenanordnung zur Speicherung von Wasserstoff für den Betrieb einer Brennstoffzelle. Vorzugsweise kann die beschriebene Tankvorrichtung in einem Fahrzeug mit Brennstoffzellenantrieb verwendet werden.

### Zeichnungen

In der Zeichnung sind Ausführungsbeispiele einer Tankvorrichtung zur Speicherung eines gasförmigen Mediums, insbesondere Wasserstoff, dargestellt. Es zeigt in
Fig. 1 ein Ausführungsbeispiel einer Tankvorrichtung mit mehreren Tankbehältern, umfassend ein Tankgehäuse mit Tankhals und Tankkörper im Längsschnitt,
Fig. 2 ein vergrößerter Ausschnitt des Ausführungsbeispiels aus der Fig. 1 im Bereich des Tankhalses.

### Beschreibung des Ausführungsbeispiels

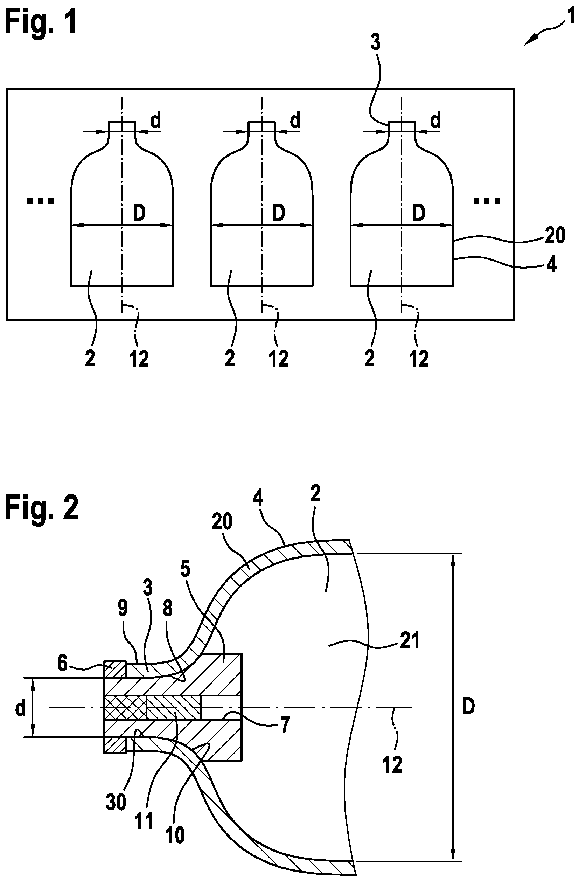

In der **Fig.1** ist ein Ausführungsbeispiel einer Tankvorrichtung 1 für ein gasförmiges Medium, insbesondere Wasserstoff, in schematischer Ansicht gezeigt. Die Tankvorrichtung 1 weist eine Vielzahl von Tankbehältern 2 mit einem Tankgehäuse 20 auf. Das Tankgehäuse 20 umfasst einen Tankkörper 4 und einen Tankhals 3 und weist eine Längsachse 12 auf. Dabei ist der Tankkörper 4 als konische Erweiterung des Tankhalses 3 ausgebildet. Sowohl der Tankkörper 4 als auch der Tankhals 3 sind zylinderförmig ausgebildet, wobei der Durchmesser D des Tankkörpers 4 größer ist als der Durchmesser d des Tankhalses 3.

**Fig.2** zeigt eine vergrößerte Ansicht des Tankbehälters 2 im Bereich des Tankhalses 3 aus der **Fig.1** im Querschnitt. Der Tankhals 3 weist einen Tankhalsinnenraum 30 auf, welcher in einen Tankinnenraum 21 des Tankkörpers 4 mündet.

In dem Tankhals 3 ist ein Anschlussverschraubungselement 5 angeordnet, das an einem konusförmigen Dichtsitz 10 anliegt, welcher an einer Innenseite 8 des Tankgehäuses 20 ausgebildet ist. So ist der Tankhalsinnenraum 30 und auch der Tankinnenraum 21 nach außen hin abgedichtet, so dass kein gasförmiges Medium aus dem Tankbehälter 2 strömen kann. Weiterhin ist das Anschlussverschraubungselement 5 mittels eines Überwurfmutterelements 6 in dem Tankhals 3 vorgespannt. Das Überwurfmutterelement 6 ist dabei an einer Außenseite 9 des Tankgehäuses 20 angebracht.

Weiterhin ist an dem Tankbehälter 2 eine Verdrehsicherung in Form eines Innensechskants angeordnet, um das Überwurfmutterelement 6 anzuziehen. Dies hat den Vorteil, dass sich das Anschlussverschraubungselement 5 nach innen nicht mitdreht, wenn das Überwurfmutterelement 6 angezogen wird.

Alternativ können auch andere Verdrehsicherungen, wie beispielsweise Bohrungen für das Ansetzen eines Stiftschlüssels eingesetzt werden.

Das Anschlussverschraubungselement 5 weist eine mittige Öffnung 7 auf, die als Durchgangsbohrung ausgebildet ist. In dieser Öffnung 7 ist koaxial zu der Längsachse 12 des Tankbehälters 2 eine Ventilvorrichtung 11 aufgenommen und mittels Verschraubung fest mit dem Anschlussverschraubungselement 5 verbunden.

Die Ventilvorrichtung 11 ist typischerweise elektromagnetisch angesteuert und regelt den Durchfluss an gasförmigem Medium, beispielsweise Wasserstoff, aus dem Tankbehälter 2 in Richtung beispielsweise einem Anodenbereich einer Brennstoffzelle. In unbestromtem Zustand ist die Ventilvorrichtung 11 geschlossen, da es als Sicherheitsventil ausgebildet ist. Dadurch kann sichergestellt werden, dass im geschlossenen Zustand sowie bei Unfällen oder Defekten zu jeder Zeit ein Gasaustritt aus den Tankbehältern 2 vermieden wird.

Der Tankbehälter 2 ist für einen Differenzdruck von 1 bar bis 1000 bar gegenüber Atmosphärendruck ausgelegt. Typischerweise werden beispielsweise bei Brennstoffzellenanordnungen Tankbehälter 2 verwendet, welche Wasserstoff mit einem Druck von bis zu 700 bar speichern. Außerdem ist der Tankbehälter aus einem Kunststoffwerkstoff, Kohlefaserwerkstoff, Aluminium, Titan, Magnesium, Faserwerkstoff, insbesondere einem Glasfaserwerkstoff, oder Stahl hergestellt.

In dem erfindungsgemäßen Verfahren wird das Anschlussverschraubungselement 5 bei bereits rückseitig verschlossenem Tankbehälter 2 mittels Bördelung in den Tankhals 3 eingefügt. Weiterhin wird eine Vorrichtung bereitgestellt, mit der das Anschlussverschraubungselement 5 von außen aus dem Inneren des Tankbehälters 2 durch den Tankhals 3 an dem Dichtsitz 10 angelegt wird. Die Feinbearbeitung der Dichtfläche an dem Dichtsitz 10 kann dabei von einer Rückseite des Tankbehälters 2 oder durch den Tankhals 3 erfolgen.

Die Tankvorrichtung 1 kann beispielsweise zur Speicherung von Wasserstoff für den Betrieb einer Brennstoffzelle verwendet oder auch in Fahrzeugen mit Brennstoffzellenantrieb integriert werden.

## Patentansprüche

1. Verfahren zum Einführen eines Anschlussverschraubungselements (5) in den Tankhals (3) des Tankbehälters (2) einer Tankvorrichtung (1) zur Speicherung eines gasförmigen Mediums, insbesondere Wasserstoff, die Tankvorrichtung umfassend mindestens einen Tankbehälter (2), welcher mindestens eine Tankbehälter (2) ein Tankgehäuse (20) mit einem Tankhals (3) aufweist, wobei in dem Tankhals (3) ein Anschlussverschraubungselement (5) angeordnet ist, welches Anschlussverschraubungselement (5) an einem an einer Innenseite (8) des Tankgehäuses (20) ausgebildeten konusförmigen Dichtsitz (10) anliegt und so einen Tankhalsinnenraum (30) des Tankhalses (3) abdichtet, wobei das Anschlussverschraubungselement (5) mittels eines an einer Außenseite (9) des Tankgehäuses (20) angebrachten Überwurfmutterelements (6) vorspannbar ist, **dadurch gekennzeichnet, dass** das Einführen des Anschlussverschraubungselements (5) in den Tankhals (3) bei bereits rückseitig verschlossenem Tankbehälter (2) mittels Bördelung erfolgt und eine Vorrichtung bereitgestellt wird, mit welcher Vorrichtung das Anschlussverschraubungselement (5) von außen aus dem Inneren des Tankbehälters (2) durch den Tankhals (3) an den Dichtsitz (10) angelegt wird.

2. Verfahre nach Anspruch 1, **dadurch gekennzeichnet, dass** das Anschlussverschraubungselement (5) eine mittige Öffnung (7) aufweist, welche Öffnung (7) als Durchgangsbohrung ausgebildet wird.

3. Verfahren nach Anspruch 2, **dadurch gekennzeichnet, dass** in der Öffnung (7) des Anschlussverschraubungselements (5) koaxial zu einer Längsachse (12) des Tankbehälters (2) eine Ventilvorrichtung (11) aufgenommen und mittels Verschraubung fest mit dem Anschlussverschraubungselement (5) verbunden wird.

4. Verfahren nach einem der vorhergehenden Ansprüche, **dadurch gekennzeichnet, dass** der mindestens eine Tankbehälter (2) für einen Differenzdruck von 1 bar bis 1000 bar gegenüber Atmosphärendruck ausgelegt wird.

5. Verfahren nach einem der vorhergehenden Ansprüche, **dadurch gekennzeichnet, dass** der Tankhals (3) zylinderförmig ausgebildet wird und als eine konische Erweiterung in einen zylinderförmigen Tankkörper (4) übergeht, wobei ein Durchmesser d des Tankhalses (3) kleiner ist als ein Durchmesser D des Tankkörpers (4).

6. Verfahren nach einem der vorhergehenden Ansprüche, **dadurch gekennzeichnet, dass** der mindestens eine Tankbehälter (2) aus einem Kunststoffwerkstoff, Kohlefaserwerkstoff, Aluminium, Titan, Magnesium, Faserwerkstoff, insbesondere einem Glasfaserwerkstoff, oder Stahl hergestellt wird.

## Claims

1. Method for inserting a connection screw element (5) into the tank neck (3) of the tank container (2) of a tank device (1) for storing a gaseous medium, in particular hydrogen, the tank device comprising at least one tank container (2), which at least one tank container (2) has a tank housing (20) with a tank neck (3), wherein a connection screw element (5) is arranged in the tank neck (3), which connection screw element (5) lies against a conical sealing seat (10) formed on an inner side (8) of the tank housing (20) and thus seals a tank neck interior (30) of the tank neck (3), wherein the connection screw element (5) is pretensionable by means of a union nut element (6) attached to an outer side (9) of the tank housing (20), **characterized in that** the connection screw element (5) is inserted into the tank neck (3) when the tank container (2) has already been closed on the rear side by means of crimping, and a device is provided, with which device the connection screw element (5) is placed from outside the interior of the tank container (2) through the tank neck (3) onto the sealing seat (10).

2. Method according to Claim 1, **characterized in that** the connection screw element (5) has a central opening (7), which opening (7) is designed as a through bore.

3. Method according to Claim 2, **characterized in that** a valve device (11) is accommodated in the opening (7) of the connection screw element (5) coaxially with respect to a longitudinal axis (12) of the tank container (2) and is connected fixedly to the connection screw element (5) by means of screwing.

4. Method according to one of the preceding claims, **characterized in that** the at least one tank container (2) is configured for a differential pressure of 1 bar to 1000 bar in relation to atmospheric pressure.

5. Method according to one of the preceding claims, **characterized in that** the tank neck (3) is cylindrical and merges as a conical widened portion into a cylindrical tank body (4), wherein a diameter d of the tank neck (3) is smaller than a diameter D of the tank body (4).

6. Method according to one of the preceding claims, **characterized in that** the at least one tank container (2) is produced from a plastics material, a carbon fibre material, aluminium, titanium, magnesium, a fibre material, in particular a glass fibre material, or steel.

## Revendications

1. Procédé pour introduire un élément de raccordement vissé (5) dans le col (3) du réservoir (2) d'un dispositif (1) formant réservoir pour le stockage d'un milieu gazeux, en particulier de l'hydrogène, le dispositif de réservoir comprenant au moins un réservoir (2), lequel au moins un réservoir (2) présente une enveloppe de réservoir (20) avec un col de réservoir (3), un élément de raccordement vissé (5) étant disposé dans le col de réservoir (3), lequel élément de raccordement vissé (5) s'appuie sur un siège d'étanchéité (10) conique formé sur un côté intérieur (8) de l'enveloppe de réservoir (20) et rend ainsi étanche un espace intérieur (30) du col de réservoir (3), l'élément de raccordement vissé (5) étant apte à être précontraint au moyen d'un élément d'écrou-raccord (6) monté sur un côté extérieur (9) de l'enveloppe de réservoir (20), **caractérisé en ce que** l'introduction de l'élément de raccordement vissé (5) dans le col de réservoir (3) s'effectue au moyen d'un sertissage lorsque le réservoir (2) est déjà fermé sur un côté arrière et **en ce qu'**un dispositif est prévu, avec lequel l'élément de raccordement vissé (5) est appliqué de l'extérieur depuis l'intérieur du réservoir (2) à travers le col de réservoir (3) sur le siège d'étanchéité (10).

2. Procédé selon la revendication 1, **caractérisé en ce que** l'élément de raccordement vissé (5) présente une ouverture centrale (7), laquelle ouverture (7) est conçue sous la forme d'un trou traversant.

3. Procédé selon la revendication 2, **caractérisé en ce qu'**un dispositif (11) formant soupape est reçu dans l'ouverture (7) de l'élément de raccordement vissé (5) coaxialement à un axe longitudinal (12) du réservoir (2) et est relié solidement à l'élément de raccordement vissé (5) par vissage.

4. Procédé selon l'une des revendications précédentes, **caractérisé en ce que** ledit au moins un réservoir (2) est conçu pour une pression différentielle de 1 bar à 1000 bar par rapport à la pression atmosphérique.

5. Procédé selon l'une des revendications précédentes, **caractérisé en ce que** le col de réservoir (3) est de forme cylindrique et évolue en un élargissement conique dans un corps de réservoir (4) de forme cylindrique, un diamètre d du col de réservoir (3) étant inférieur à un diamètre D du corps de réservoir (4).

6. Procédé selon l'une des revendications précédentes, **caractérisé en ce que** ledit au moins un réservoir (2) est fabriqué en un matériau plastique, en un matériau à base de fibres de carbone, en aluminium, en titane, en magnésium, en un matériau à base de fibres, en particulier en un matériau à base de fibres de verre, ou en acier.
